# EUROPÄISCHE PATENTSCHRIFT

(11) **EP 2 773 500 B1**
(45) Veröffentlichungstag und Bekanntmachung des Hinweises auf die Patenterteilung: **20.09.2017**
(21) Anmeldenummer: 12784535.2
(22) Anmeldetag: 29.10.2012
(51) Int. Cl.: B29D 29/08, D06M 15/564, F16G 1/10, F16G 1/16, F16G 1/28, F16G 5/14, F16G 5/20, C08J 5/24, B29K 75/00

(54) **RIEMEN MIT EINEM ZUGTRÄGER, INSBESONDERE CARBON-ZUGTRÄGER, DER MIT EINEM VERNETZTEN POLYURETHAN PRÄPARIERT IST, SOWIE PRÄPARATIONSVERFAHREN**
BELT HAVING A TENSION MEMBER, IN PARTICULAR A CARBON TENSION MEMBER, WHICH IS PREPARED WITH A CROSS-LINKED POLYURETHANE, AND PREPARATION METHOD
COURROIE À CARCASSE, EN PARTICULIER À CARCASSE EN CARBONE TRAITÉE À L'AIDE D'UN POLYURÉTHANE RÉTICULÉ, ET PROCÉDÉ DE TRAITEMENT ASSOCIÉ

(30) Priorität: 02.11.2011 DE 102011054978
(43) Veröffentlichungstag der Anmeldung: 10.09.2014
(73) Patentinhaber: ContiTech Antriebssysteme GmbH, 30165 Hannover (DE)
(72) Erfinder: BROCKE, Stefen, 22143 Hamburg (DE); GÖSER, Hubert, 29451 Dannenberg (DE); KUCHARCZYK, Andrè, 29499 Gülden (DE); OBERT, Markus, 30457 Hannover (DE)
(74) Vertreter: Preusser, Andrea
(86) Internationale Anmeldenummer: PCT/EP2012/071343
(87) Internationale Veröffentlichungsnummer: WO 2013/064446

(56) Entgegenhaltungen:
- EP-A1- 0 688 973
- EP-A1- 1 762 654
- EP-A2- 2 101 079
- WO-A1-2011/068729
- DE-A1- 10 230 306
- DE-A1-102004 062 760
- DE-A1-102010 043 322
- US-A1- 2009 142 572

## Beschreibung

Die Erfindung betrifft einen Riemen, bestehend wenigstens aus:
- einem Riemenkörper aus einem polymeren Material mit elastischen Eigenschaften, umfassend eine Decklage als Riemenrücken und einen Unterbau mit einer Kraftübertragungszone; sowie
- einem in dem Riemenkörper eingebetteten Zugträger in Cordkonstruktion, wobei der Zugträger mit einem vernetzten Polyurethan, gebildet aus einem Polyurethan-Präpolymer und einem Vernetzer, präpariert ist, und zwar derart, dass das Polyurethan wenigstens einen Teil der Zugträgerhohlräume ausfüllt, wobei das Polyurethanfüllmaterial einerseits eine mechanische Anbindung zum Zugträger und andererseits einen Haftverbund mit dem Riemenkörper eingeht.
Ein Riemen der oben genannten Art spielt insbesondere in der Antriebstechnik eine herausragende Rolle. Derartige Riemen, die auch als Antriebsriemen oder Kraftübertragungsriemen bezeichnet werden, können als Flachriemen, Keilriemen, Keilrippenriemen, Zahnriemen oder als Verbundseile ausgebildet sein. Die Kraftübertragungszone korrespondiert dabei mit dem Riementrieb. Diesbezüglich wird insbesondere auf folgende Patentliteratur verwiesen: DE 38 23 157 A1, DE 100 16 351 A1, DE 10 2006 007 509 A1, DE 10 2007 062 285 A1, DE 10 2008 012 044 A1,
DE 10 2009 044 153 A1, EP 0 841 500 A2, WO 2005/080821 A1, WO 2006/066669 A1, WO 2011/068729 A1, US 3 981 206, US 5 417 618, US 6 491 598 und DE 102 30 306 A1. Darüber hinaus ist es bekannt, Riemen zur Förderung von Materialien einzusetzen, wobei derartige Riemen auch als Transportbänder oder Fördergurte bezeichnet werden. Die Decklage als Riemenrücken wäre dann hier die tragseitige Deckplatte für das Fördermaterial. Der Unterbau wäre dann wiederum die laufseitige Deckplatte, die Kontakt mit einer Antriebstrommel hat.

Die Elastizität eines Riemens wird dadurch erreicht, dass der Riemenkörper und somit die Decklage und der Unterbau aus einem polymeren Material mit elastischen Eigenschaften bestehen, wobei hier insbesondere die beiden Materialgruppen Elastomere und thermoplastische Elastomere zu nennen sind. Von besonderer Bedeutung sind Elastomere auf der Basis einer vernetzten Kautschukmischung, enthaltend wenigstens eine Kautschukkomponente und Mischungsingredienzien. Als Kautschukkomponente wird insbesondere Ethylen-Propylen-Kautschuk (EPM), Ethylen-Propylen-Dien-Kautschuk (EPDM), (teil)hydrierter Nitrilkautschuk (HNBR), Fluor-Kautschuk (FKM), Naturkautschuk (NR), Chloropren-Kautschuk (CR), Styrol-Butadien-Kautschuk (SBR), Butadien-Kautschuk (BR) oder Polyurethan (PU) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei HNBR, EPM, EPDM, PU oder ein EPM/EPDM-Verschnitt. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern zwecks Verstärkung und Farbpigmente. Diesbezüglich wird auf den allgemeinen Stand der Kautschukmischungstechnologie verwiesen.

Der Riemen ist mit einem eingebetteten Zugträger versehen, der aus wenigstens einem in Riemenlängsrichtung verlaufenden Zugstrang gebildet ist. Zumeist bilden mehrere Zugstränge eine Zugträgerlage. Von besonderer Bedeutung ist dabei ein Zugstrang in Cordkonstruktion, wobei es diesbezüglich nach dem Stand der Technik verschiedene Werkstoffkonzeptionen gibt. Die wesentlichen Werkstofftypen sind: Stahl, Polyamid (PA), Aramid, Polyester, Carbon (Kohle), Basalt, Polyetheretherketon (PEEK), Polyethylentherephthalat (PET), Polybenzoxazol (PBO) oder Polyethylen-2,6-naphthalat (PEN).

Insbesondere die Kraftübertragungszone eines Riemens für die Antriebstechnik wird mit einer abriebfesten Beschichtung versehen, die zusätzlich zur Geräuschreduzierung dient und zudem noch ölbeständig ausgerüstet sein kann. Eingesetzt wird dabei eine Flockauflage, insbesondere in Form eines Baumwoll- oder Aramidflocks, eine dünne mit Fasern (z.B. Aramidfasern) gefüllte elastische Polymerschicht, eine Textilauflage, insbesondere in Form eines Gewebes, Gewirkes oder Gestrickes, oder eine Folie (z.B. PTFE-Folie) oder ein Folienverbund (z.B. PA-PTFE-Folie). Von besonderer Bedeutung ist das Gewebe. Die hier genannten Beschichtungen werden auf der Kontaktseite zum Riemenkörper, insbesondere zu dessen Unterbau, zumeist haftfreundlich präpariert, beispielsweise mit einem Resorcin-Formaldehyd-Latex (RFL).

Im Folgenden wird nun auf den Stand der Technik der Polyurethan-Präparation des Zugträgers näher eingegangen.
- In der Offenlegungsschrift EP 0 841 500 A2 wird ein Zahnriemen vorgestellt, bei dem der Riemenkörper aus einem gegossenen Polyurethan besteht. Der eingebettete Zugträger in Cordkonstruktion ist aus Carbon-Fasern gebildet, verbunden mit einer Cordbearbeitung. Beim Gießen des Riemens wird dabei nur ein Teil der Zugträgerhohlräume mit der Polyurethangießmasse ausgefüllt. Nachteilig ist, dass eine derartige Präparation des Zugträgers mit Polyurethan voraussetzt, dass der Riemenkörper ebenfalls aus einem Polyurethan der gleichen Zusammensetzung besteht. Es wird also keine Rücksicht genommen auf die unterschiedlichen Eigenschaften des Carbon-Zugträgers und des Riemenkörpers.
- Aus der Offenlegungsschrift WO 2011/068729 A1 ist nun ein Riemen, insbesondere ein Zahnriemen und Keilrippenriemen, bekannt, dessen Zugträger in Cordkonstruktion, insbesondere Carbon-Zugträger, mit einem vernetzten Polyurethan präpariert ist. Der Füllungsgrad der Zugträgerhohlräume mit dem vernetzten Polyurethan beträgt vorzugsweise 20 % bis 100 %. Bei der Bildung des Polyurethans werden ferner insbesondere folgende Komponenten A und B eingesetzt:

| | |
|---|---|
| Komponente A: | Polyole der Gruppen Polyester-Polyole, Polycarbonat-Polyole und Polyether-Polyole; |
| Komponente B: | Diisocyanate, insbesondere Para-Phenylen-Diisocyanat und 4,4'-Methylen-Diphenyl-Diisocyanat. |

Durch Reaktion eines Polyols mit einem Diisocyanat entsteht zunächst das Polyurethan-Präpolymer, verbunden mit einer anschließenden Vernetzung mit einem Diamin und/oder mit Wasser, insbesondere ausschließlich mit Wasser. In diesem Zusammenhang wird auch im Rahmen einer vorgeschalteten Verfahrensstufe ein Präparationsverfahren für den Zugträger vorgestellt, und zwar unter dem Gesichtspunkt eines "Zwei-Bäder-Konzeptes". In einem Gemisch aus einem Polyurethan-Präpolymer und einem inerten Lösungsmittel bzw. Dispergiermittel wird der Zugträger getränkt, verbunden mit einer zumindest teilweisen Füllung der Zugträgerhohlräume mit diesem Gemisch. Danach erfolgt eine Trocknung. Abschließend wird eine Vernetzung mit Wasser durchgeführt. Danach erfolgt die Produktion des Riemens mit dem auf diese Weise präparierten Zugträger.

Der Riemenkörper selbst kann aus einem anderen Material bestehen, wobei vorzugsweise ebenfalls ein vernetztes Polyurethan eingesetzt wird, das jedoch eine andere Zusammensetzung als das Polyurethan für die Zugträgerpräparation aufweisen kann.

Im Rahmen einer Weiterentwicklung der Lehre gemäß WO 2011/068729 A1 besteht nun die Aufgabe der Erfindung darin, einen Riemen bereitzustellen, der eine Abstufung der Kraftüberleitung vom Polymermaterial des Riemenkörpers in den Zugträger ermöglicht. So hat nämlich der Zugträger eine sehr hohe Steifigkeit, während der Riemenkörper selbst relativ weich ist, was hohe Scherkräfte im Grenzbereich hervorrufen kann. Darüber hinaus soll das Polyurethanfüllmaterial einerseits eine sehr gute mechanische Anbindung zum Zugträger und andererseits eine sehr gute chemische Anbindung zum Riemenkörper haben. In der Gesamtheit dieser Aufgabenstellung soll somit ein Riemen mit einer höheren Lebensdauer bereitgestellt werden.

Gelöst wird diese Aufgabe durch die Merkmale des Anspruchs 1, wobei das Polyurethanfüllmaterial 0,5 bis 10 Shore A härter ist als der Riemenkörper.

Die vorteilhaften Gestaltungsmöglichkeiten des erfindungsgemäßen Riemens sind:
- Das Polyurethanfüllmaterial ist 2 bis 5 Shore A härter als der Riemenkörper.
- Das Polyurethanfüllmaterial füllt wenigstens 20 %, insbesondere wenigstens 30 %, der Zugträgerhohlräume aus. Auch ein 100 %-iger Füllungsgrad ist möglich.
- Das Polyurethanfüllmaterial wird mittels eines Diols, insbesondere eines Butandiols insbesondere wiederum mittels 1,4-Butandiol, vernetzt. Bei der Präpolymerbildung kann beispielsweise auf die Polyole und Diisocyanate, die in der Offenlegungsschrift WO 2011/068729 A1 vorgestellt werden, zurückgegriffen werden.
- Der Riemenkörper selbst kann aus einem anderen Material gebildet sein. Vorzugsweise besteht der Riemenkörper ebenfalls aus einem vernetzten Polyurethan, das jedoch nicht die gleiche Zusammensetzung haben muss wie das Polyurethanfüllmaterial.
- Der Zugträger ist aus einem faserförmigen Material gebildet, insbesondere aus Carbon-Fasern, Glas-Fasern, Aramid-Fasern oder nach einer neueren Entwicklung aus Basalt-Fasern (DE 10 2009 044 153 A1). Bei den Aramid-Fasern können Para-Aramid oder Meta-Aramid verwendet werden.

Von besonderer Bedeutung ist jedoch die Zugträgerbildung aus Carbon-Fasern.
- Der Riemen wird insbesondere für die Antriebstechnik verwendet. Er ist dabei insbesondere als Zahnriemen oder Keilrippenriemen ausgebildet.

Ein weitere Aufgabe der Erfindung besteht darin, ein Präparationsverfahren für den Zugträger eines Riemens der vorgenannten Art bereitzustellen, bei der die Präparation des Zugträgers mit einem vernetzen Polyurethan wirtschaftlich ist, und zwar unter Erfüllung der eingangs gestellten Anforderungen an den Riemen.

Gelöst wird diese Aufgabe durch die Merkmale des Anspruchs 13, wobei die folgenden Verfahrensvarianten I oder II möglich sind.

### - Verfahrensvariante I

Im Rahmen einer vorgeschalten Verfahrensstufe der Riemenfertigung wird in einer einzigen Präparationsstufe der Zugträger in einem Gemisch aus einem Polyurethan-Präpolymer, einem Vernetzer und einem inerten Lösungsmittel oder Dispergiermittel, beispielsweise Toluol, getränkt, wobei das Gemisch wenigstens einen Teil der Zugträgerhohlräume ausfüllt, verbunden mit einer anschließenden Trocknung des präparierten Zugträgers.

Während das Gemisch in die Zugträgerhohlräume eindringt, findet bereits eine beginnende Vernetzung statt, wobei zumeist im Rahmen der anschließenden Trocknung eine weitere Vernetzung (Ausvernetzung) erfolgt.

### - Verfahrensvariante II

Im Rahmen einer ebenfalls vorgeschalteten Verfahrensstufe der Riemenfertigung wird in wenigstens zwei Präparationsstufen der Zugträger in jeweils einem Gemisch aus einem Polyurethan-Präpolymer, einem Vernetzer und einem inerten Lösungsmittel oder Dispergiermittel, beispielsweise wiederum Toluol, getränkt, wobei das jeweilige Gemisch wenigstens einen Teil der Zugträgerhohlräume ausfüllt, verbunden mit einer anschließenden Trocknung.

Bei jeder Präparationsstufe kann das gleiche Gemisch eingesetzt werden.

Besonders vorteilhaft ist es, wenn bei jeder Präparationsstufe ein anderes Gemisch eingesetzt wird. Durch unterschiedliche Präparationsgemische kann nämlich die angestrebte Härte-/Steifigkeits-Abstufung weiter optimiert werden.

Darüber hinaus kann zwischen jeder Präparations stufe eine Trocknung durchgeführt werden.

Hinsichtlich des Vernetzungsablaufs beim Füllvorgang und bei der Trocknung wird auf die Verfahrensvariante I verwiesen.

Bei beiden Verfahrensvarianten I und II, die sich von der Präparationslehre gemäß der Offenlegungsschrift WO 2011/068729 A1 unterscheiden, wird als Vernetzer vorzugsweise ein Diol, insbesondere ein 1,4-Butandiol, eingesetzt.

Mit dem nach beiden Verfahrensvarianten I und II präparierten Zugträger wird dann die Riemenfertigung unter Einbezug der Lehre gemäß Anspruch 1 vorgenommen. Ansonsten wird hinsichtlich der Riemenfertigung beispielsweise auf den eingangs zitierten Stand der Riementechnologie verwiesen.

Die Erfindung wird nun anhand eines Ausführungsbeispiels unter Bezugnahme auf schematische Zeichnungen näher erläutert. Es zeigen:
- Fig. 1: einen Zahnriemen;
- Fig. 2: eine Litze, gebildet aus Filamenten als Basis einer Cordkonstruktion.

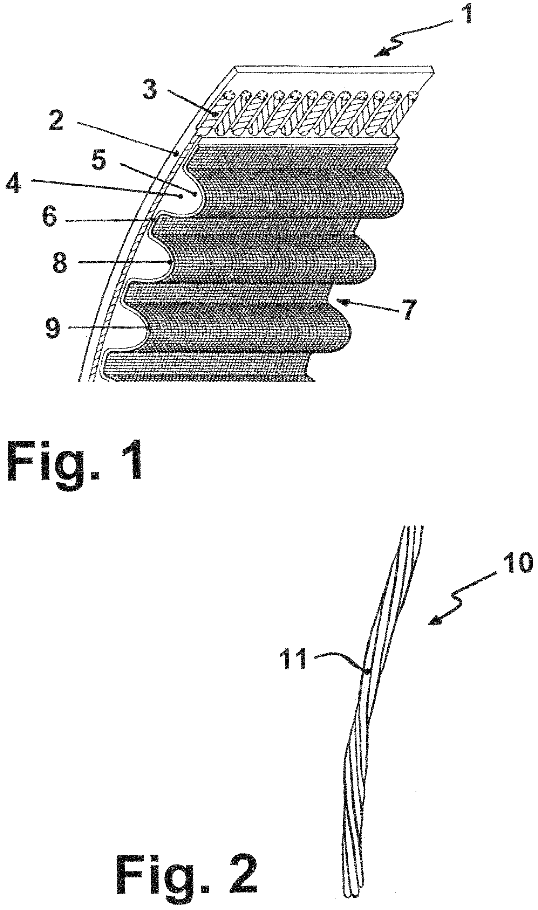

Fig. 1 zeigt einen Riemen 1 in Form eines Zahnriemens mit einer Decklage 2 als Riemenrücken, einem eingebetteten Zugträger 3 mit mehreren in Riemenlängsrichtung parallel verlaufenden Zugsträngen sowie einem Unterbau 4. Der Unterbau ist mit einer zahnförmigen Profilierung, umfassend Zähne 5 und Zahnstege 6, versehen und umfasst die Kraftübertragungszone 7.

Die Decklage 2 und der Unterbau 4 bilden dabei als Gesamteinheit den Riemenkörper aus einem polymeren Werkstoff mit elastischen Eigenschaften. Hinsichtlich der bevorzugten diesbezüglichen Materialbasis wird auf die Beschreibungseinleitung zum Stand der Technik verwiesen. Von besonderer Bedeutung ist dabei der Einsatz von vernetztem Polyurethan.

Der Zugträger 3 in Cordkonstruktion ist insbesondere aus Carbon-Fasern gebildet, wobei der Zugträger mit einem vernetzten Polyurethan präpariert ist, was in Verbindung mit Fig. 2 noch näher erläutert wird.

Die Kraftübertragungszone 7 des Riemens ist besonders verschleißanfällig durch Abrieb, Hitze und den Einfluss durch Öle. Aus diesem Grunde wird die Kraftübertragungszone zumeist mit einer Textilauflage 8, beispielsweise in Form eines Gewebes, versehen. Diese Textilauflage wird beispielsweise nach der Lehre des Dokumentes WO 2005/080821 A1 zusätzlich mit einem fluorhaltigen Kunststoff, der insbesondere Polytetrafluorethylen (PTFE) ist, getränkt, und zwar bei einem hohen Füllungsgrad des Kunststoffes, wobei gleichzeitig eine Polymerbeschichtung (Versiegelung) als zusätzliche ölbeständige Schutzschicht 9 gebildet wird. Die beiden Teilschichten 8 und 9 mit unterschiedlichen Funktionen treten hier als gemeinsame Schutzschicht auf.

Auch die Decklage 2 des Riemens 1 kann mit einer Textilauflage versehen werden, beispielsweise in der oben beschriebenen Art.

Der Riemen 1 in seiner besonderen Ausführung als Zahnriemen ist besonders dafür geeignet, eine Ölpumpe eines Motors, beispielsweise eines KFZ-Motors, anzutreiben.

Fig. 2 zeigt eine Litze 10, gebildet aus einer Gruppe von Filamenten 11, wobei 100 bis 1000 Filamente, insbesondere 500 bis 700 Filamente, eine Litze bilden. Die Litze liegt dabei zumeist als Litzenhelix vor, was in der Fig. 2 verdeutlicht wird. Eine Gruppe von Litzen bildet schließlich den Cord. Zumeist besteht ein Cord aus wenigstens fünf Litzen, insbesondere aus 10 bis 20 Litzen.

Die Filamente 11 sind aus einem Fasermaterial gebildet, insbesondere aus Carbon-Fasern. Man spricht in diesem Zusammenhang auch von Faserfilamenten.

Die gesamte Cordkonstruktion, umfassend das Gesamtsystem von Fasern, Filamenten und Litzen, beinhaltet Hohlräume, nämlich innerhalb der Fasern sowie zwischen den Filamenten und Litzen, die nun im Rahmen der Präparation mit dem vernetzten Polyurethan zumindest teilweise ausgefüllt werden, wobei das Polyurethanfüllmaterial 0,5 bis 10 Shore A, insbesondere 2 bis 5 Shore A, härter ist als der Riemenkörper, verbunden mit einer sehr guten mechanischen Anbindung zu den Faserfilamenten und somit zum Zugträger und mit einer sehr guten chemischen Anbindung zum Riemenkörper. Darüber hinaus ist hiermit ein weicher Kraftübergang realisiert, verbunden mit verminderten Scherkräften. Dies führt schließlich zu einer höheren Lebensdauer des Riemens.

### Bezugszeichenliste

### (Teil der Beschreibung)

- 1: Riemen in Form eines Zahnriemens
- 2: Decklage als Riemenrücken
- 3: Zugträger
- 4: Unterbau
- 5: Zahn
- 6: Zahnsteg
- 7: Kraftübertragungszone
- 8: Textilauflage (Zahnauflage)
- 9: Schutzschicht
- 10: Litze
- 11: Filament

## Patentansprüche

1. Riemen (1), bestehend wenigstens aus:
einem Riemenkörper aus einem polymeren Material mit elastischen Eigenschaften, umfassend eine Decklage (2) als Riemenrücken und einen Unterbau (4) mit einer Kraftübertragungszone (7); sowie
einem in dem Riemenkörper eingebetteten Zugträger (3) in Cordkonstruktion, wobei der Zugträger mit einem vernetzten Polyurethan, gebildet aus einem Polyurethan-Präpolymer und einem Vernetzer, präpariert ist, und zwar derart, dass das Polyurethan wenigstens einen Teil der Zugträgerhohlräume ausfüllt, wobei das Polyurethanfüllmaterial einerseits eine mechanische Anbindung zum Zugträger und andererseits einen Haftverbund mit dem Riemenkörper eingeht;
**dadurch gekennzeichnet, dass** das Polyurethanfüllmaterial 0,5 bis 10 Shore A härter ist als der Riemenkörper.

2. Riemen nach Anspruch 1, **dadurch gekennzeichnet, dass** das Polyurethanfüllmaterial 2 bis 5 Shore A härter ist als der Riemenkörper.

3. Riemen nach Anspruch 1 oder 2, **dadurch gekennzeichnet, dass** das Polyurethanfüllmaterial wenigstens 20 % der Zugträgerhohlräume ausfüllt.

4. Riemen nach Anspruch 3, **dadurch gekennzeichnet, dass** das Polyurethanfüllmaterial wenigstens 30 % der Zugträgerhohlräume ausfüllt.

5. Riemen nach einem der Ansprüche 1 bis 4, **dadurch gekennzeichnet, dass** das Polyurethanfüllmaterial mittels eines Diols vernetzt ist.

6. Riemen nach Anspruch 5, **dadurch gekennzeichnet, dass** das Polyurethanfüllmaterial mittels eines Butandiols vernetzt ist.

7. Riemen nach einem der Ansprüche 1 bis 6, **dadurch gekennzeichnet, dass** der Riemenkörper aus einem vernetzten Polurethan besteht.

8. Riemen nach einem der Ansprüche 1 bis 7, **dadurch gekennzeichnet, dass** der Zugträger (3) aus einem faserförmigen Material gebildet ist.

9. Riemen nach Anspruch 8, **dadurch gekennzeichnet, dass** der Zugträger (3) aus Carbon-Fasern, Glas-Fasern, Aramid-Fasern oder Basalt-Fasern gebildet ist.

10. Riemen nach Anspruch 9, **dadurch gekennzeichnet, dass** der Zugträger (3) aus Carbon-Fasern gebildet ist.

11. Riemen nach einem der Ansprüche 1 bis 10 zur Verwendung in der Antriebstechnik.

12. Riemen nach Anspruch 11, **dadurch gekennzeichnet, dass** der Riemen (1) als Zahnriemen oder Keilrippenriemen ausgebildet ist.

13. Verfahren zur Präparation des Zugträgers (3) eines Riemens (1) nach einem der Ansprüche 1 bis 12, **dadurch gekennzeichnet, dass** im Rahmen einer vorgeschalteten Verfahrensstufe der Riemenfertigung in einer einzigen Präparationsstufe der Zugträger (3) in einem Gemisch aus einem Polyurethan-Präpolymer, einem Vernetzer und einem inerten Lösungsmittel oder Dispergiermittel getränkt wird, wobei das Gemisch wenigstens einen Teil der Zugträgerhohlräume ausfüllt, verbunden mit einer anschließenden Trocknung des präparierten Zugträgers (3).

14. Verfahren zur Präparation des Zugträgers (3) eines Riemens (1) nach einem der Ansprüche 1 bis 12, **dadurch gekennzeichnet, dass** im Rahmen einer vorgeschalteten Verfahrensstufe der Riemenfertigung in wenigstens zwei Präparationsstufen der Zugträger (3) in jeweils einem Gemisch aus einem Polyurethan-Präpolymer, einem Vernetzer und einem inerten Lösungsmittel oder Dispergiermittel getränkt wird, wobei das jeweilige Gemisch wenigstens einen Teil der Zugträgerhohlräume ausfüllt, verbunden mit einer anschließenden Trocknung des präparierten Zugträgers (3).

15. Verfahren nach Anspruch 14, **dadurch gekennzeichnet, dass** bei jeder Präparationsstufe das gleiche Gemisch oder ein anderes Gemisch eingesetzt wird.

## Claims

1. Belt (1) consisting at least of:
- a belt body composed of a polymeric material having elastic properties and comprising a top ply (2) as belt backing and a substructure (4) having a power transmission zone (7); and also
- a tensile member (3) embedded in the belt body and being in cord construction, wherein the tensile member has been treated with a crosslinked polyurethane, formed from a polyurethane prepolymer and a crosslinker, in such a way that the polyurethane fills at least some of the tensile member voids, the polyurethane filling material forming both a mechanical attachment to the tensile member and an adherent bond with the belt body;
**characterized in that** the polyurethane filling material has a Shore A hardness which is greater by 0.5 to 10 than the belt body.

2. Belt according to Claim 1, **characterized in that** the polyurethane filling material has a Shore A hardness which is greater by 2 to 5 than the belt body.

3. Belt according to Claim 1 or 2, **characterized in that** the polyurethane filling material fills at least 20% of the tensile member voids.

4. Belt according to Claim 3, **characterized in that** the polyurethane filling material fills at least 30% of the tensile member voids.

5. Belt according to any of Claims 1 to 4, **characterized in that** a diol is used to crosslink the polyurethane filling material.

6. Belt according to Claim 5, **characterized in that** a butanediol is used to crosslink the polyurethane filling material.

7. Belt according to any of Claims 1 to 6, **characterized in that** the belt body consists of a crosslinked polyurethane.

8. Belt according to any of Claims 1 to 7, **characterized in that** the tensile member (3) is formed of a fibrous material.

9. Belt according to Claim 8, **characterized in that** the tensile member (3) is formed of carbon fibers, glass fibers, aramid fibers or basalt fibers.

10. Belt according to Claim 9, **characterized in that** the tensile member (3) is formed of carbon fibers.

11. Belt according to any of Claims 1 to 10 for use in the drive technology.

12. Belt according to Claim 11, **characterized in that** the belt (1) is designed as a toothed belt or a V ribbed belt.

13. Method of treating the tensile member (3) of a belt (1) according to any of Claims 1 to 12, **characterized in that** the tensile member (3) is soaked in a mixture of a polyurethane prepolymer, a crosslinker and an inert solvent or dispersant in a single treatment stage in the course of an upstream stage of the belt fabrication process, wherein the mixture fills at least some of the tensile member voids, and the treated tensile member (3) is subsequently dried.

14. Method of treating the tensile member (3) of a belt (1) according to any of Claims 1 to 12, **characterized in that** the tensile member (3) is soaked in a mixture of a polyurethane prepolymer, a crosslinker and an inert solvent or dispersant in each of two or more treatment stages in the course of an upstream stage of the belt fabrication process, wherein each mixture fills at least some of the tensile member voids, and the treated tensile member (3) is subsequently dried.

15. Method according to Claim 14, **characterized in that** each treatment stage employs the same mixture or a different mixture.

## Revendications

1. Courroie (1), constituée au moins par :
un corps de courroie en un matériau polymère à propriétés élastiques, comprenant une couche de recouvrement (2) formant le dos de la courroie et une sous-structure (4) comprenant une zone de transmission de force (7) ; et
une couche de traction (3) à structure cordée incorporée dans le corps de courroie, la couche de traction étant traitée avec un polyuréthane réticulé, formé à partir d'un prépolymère de polyuréthane et d'un agent de réticulation, et ce de sorte que le polyuréthane remplisse au moins une partie des cavités de la couche de traction, le matériau de remplissage polyuréthane produisant d'une part une liaison mécanique avec la couche de traction et d'autre part une liaison adhésive avec le corps de courroie ;
**caractérisée en ce que** le matériau de remplissage polyuréthane est 0,5 à 10 Shore A plus dur que le corps de courroie.

2. Courroie selon la revendication 1, **caractérisée en ce que** le matériau de remplissage polyuréthane est 2 à 5 Shore A plus dur que le corps de courroie.

3. Courroie selon la revendication 1 ou 2, **caractérisée en ce que** le matériau de remplissage polyuréthane remplit au moins 20 % des cavités de la couche de traction.

4. Courroie selon la revendication 3, **caractérisée en ce que** le matériau de remplissage polyuréthane remplit au moins 30 % des cavités de la couche de traction.

5. Courroie selon l'une quelconque des revendications 1 à 4, **caractérisée en ce que** le matériau de remplissage polyuréthane est réticulé au moyen d'un diol.

6. Courroie selon la revendication 5, **caractérisée en ce que** le matériau de remplissage polyuréthane est réticulé au moyen d'un butanediol.

7. Courroie selon l'une quelconque des revendications 1 à 6, **caractérisée en ce que** le corps de courroie est constitué d'un polyuréthane réticulé.

8. Courroie selon l'une quelconque des revendications 1 à 7, **caractérisée en ce que** la couche de traction (3) est formée par un matériau fibreux.

9. Courroie selon la revendication 8, **caractérisée en ce que** la couche de traction (3) est formée par des fibres de carbone, des fibres de verre, des fibres d'aramide ou des fibres de basalte.

10. Courroie selon la revendication 9, **caractérisée en ce que** la couche de traction (3) est formée par des fibres de carbone.

11. Courroie selon l'une quelconque des revendications 1 à 10, destinée à une utilisation dans la technique d'entraînement.

12. Courroie selon la revendication 11, **caractérisée en ce que** la courroie (1) est configurée sous la forme d'une courroie dentée ou d'une courroie nervurée.

13. Procédé de traitement de la couche de traction (3) d'une courroie (1) selon l'une quelconque des revendications 1 à 12, **caractérisé en ce que**, dans le cadre d'une étape de procédé en amont de la fabrication de la courroie, lors d'une étape de traitement unique, la couche de traction (3) est imprégnée dans un mélange d'un prépolymère de polyuréthane, d'un agent de réticulation et d'un solvant ou dispersant inerte, le mélange remplissant au moins une partie des cavités de la couche de traction, avec séchage ultérieur de la couche de traction traitée (3).

14. Procédé de traitement de la couche de traction (3) d'une courroie (1) selon l'une quelconque des revendications 1 à 12, **caractérisé en ce que**, dans le cadre d'une étape de procédé en amont de la fabrication de la courroie, lors d'au moins deux étapes de traitement, la couche de traction (3) est à chaque fois imprégnée dans un mélange d'un prépolymère de polyuréthane, d'un agent de réticulation et d'un solvant ou dispersant inerte, le mélange remplissant à chaque fois au moins une partie des cavités de la couche de traction, avec séchage ultérieur de la couche de traction traitée (3).

15. Procédé selon la revendication 14, **caractérisé en ce que** le même mélange ou un mélange différent est utilisé lors de chaque étape de traitement.
